# EUROPEAN PATENT APPLICATION

(11) **EP 4 250 681 A1**
(43) Date of publication of application: **27.09.2023**
(21) Application number: 23163188.8
(22) Date of filing: 21.03.2023
(51) Int. Cl.: H04L 51/214, H04L 51/212, H04L 12/18, H04L 51/046

(54) **ONLINE DATING COMMUNICATION MANAGEMENT**

(30) Priority: 21.03.2022 US 202263321851 P; 20.04.2022 US 202217725437
(71) Applicant: Morphkey LLC, Santa Monica, CA 90403 (US)
(72) Inventor: ALBERT, Michael, Santa Monica, 90403 (US)
(74) Representative: Whiting, Gary

(57) **Abstract**

Embodiments of the inventive subject matter are directed to online dating communication systems and methods that allow users to communicate with each other with fewer distractions. In some embodiments, when two users schedule a time to communicate with each other, those users are not notified of, e.g., new communication requests until the communication has completed. In some embodiments, new alerts are not pushed to a user until an ongoing communication has ended. In some embodiments, new alerts are not pushed to a user until some amount of time since beginning the communication has elapsed. And in still further embodiments, alerts are not pushed until some other threshold criteria is met, such as a total number of messages sent back and forth.

## Description

This application claims priority to U.S. Provisional Patent Application Serial No. 63/321851 filed March 21, 2022.

### Field of the Invention

The field of the invention is online dating communication management.

### Background

The background description includes information that may be useful in understanding the present invention. It is not an admission that any of the information provided in this application is prior art or relevant to the presently claimed invention, or that any publication specifically or implicitly referenced is prior art.

Online dating, ideally, involves matching with other users, initiating a conversation, and then meeting in person. But matching with other users and initiating conversations can be intimidating and often challenging. Users are often presented with many different options of people to talk to, making it easy to become distracted by others instead of focusing on a conversation once it has begun. This contributes to people missing out on connections with others that they might otherwise form in a less distracted environment.

Different online dating platforms have developed different ways of managing communication to overcome some of the challenges associated with online dating. For example, Bumble only allows its female users to start conversations with male users. This marks an effort to address female users from feeling overwhelmed by receiving too many messages at once. Hinge, on the other hand, allows users to comment on different aspects of other peoples' dating profiles to spark conversation. But no existing platform has contemplated a mutual communication exclusivity solution that allows a user to communicate exclusively with only one other user at a time.

Thus, there is still a need in the art for improved online dating communication methods that improve user experience and facilitate the development of deeper connections.

### Brief Description of the Drawings

**Figure 1** shows a first situation where a man connects with a woman.
**Figure 2** shows a second situation where the man and the woman are engaged in an ongoing communication.
**Figure 3** shows that the ongoing communication has ended, and both the man and woman are alerted to new connections or new message notifications.
**Figure 4** shows another embodiment where instead of receiving alerts or notifications after a communication has ended, the man and woman receive alerts or notifications after some amount of time has elapsed.
**Figure 5** shows a flowchart of method steps for an embodiment of the inventive subject matter.
**Figure 6** shows how a first and second user can interact with one another via platform server to schedule and carry out a communication.

### Summary of the Invention

The present invention provides apparatuses, systems, and methods directed to online dating communications. In one aspect of the inventive subject matter, a method of facilitating online dating connections is contemplated, the method comprising: creating, on a platform server, a first user account comprising a first user profile corresponding to a first user and a second user account comprising a second user profile corresponding to a second user; sending, from the platform server to the first user, a list of user profiles comprising the second user profile; receiving, at the platform server from the first user, a communication request comprising a selection of the second user profile and a proposed communication time; sending, from the platform server to the second user, a communication request notification comprising the proposed communication time; receiving at a receipt time, at the platform server from the second user, a communication acceptance comprising a confirmed communication time; connecting the first user and the second user to engage in a communication at the confirmed communication time, where the first user and the second user communicate from the confirmed communication time until an end time; and preventing the first user and the second user from receiving new communication request notifications between the receipt time and the end time.

In some embodiments, the first user and the second user are connected via at least one of voice over IP, video chat, and text messaging. The second user profile can have a set of available communication times associated with it, and the proposed communication time can thus be selected from the set of available communication times. The end time can occur after an amount of time has elapsed from the confirmed communication time, and the end time can occur when the communication is concluded.

In another aspect of the inventive subject matter, a method of facilitating online dating connections is contemplated, the method comprising: creating, on a platform server, a first user account comprising a first user profile corresponding to a first user, a second user account comprising a second user profile corresponding to a second user, and a third user account comprising a third user profile corresponding to a third user; sending, from the platform server to the first user, a first list of user profiles comprising the third user profile; sending, from the platform server to the second user, a second list of user profiles comprising the third user profile; receiving, at the platform server from the first user, a first communication request comprising a first selection of the third user profile and a first proposed communication time; receiving, at the platform server from the second user, a second communication request comprising a second selection of the third user profile and a second proposed communication time; sending, from the platform server to the third user, a first communication request notification comprising the first proposed communication time and a second communication request notification comprising the second proposed communication time; receiving at a receipt time, at the platform server from the third user, a communication acceptance comprising a confirmed communication time corresponding to the first proposed communication time; connecting the first user and the third user to engaged in a communication at the confirmed communication time, where the first user and the third user communicate from the confirmed communication time until an end time; preventing the first user and the third user from receiving new communication request notifications from the receipt time until the end time; and hiding, from the third user, the second communication request notification from the receipt time until the end time.

In some embodiments, the first user and the third user are connected via at least one of voice over IP, video chat, and text message. The third user profile can have a set of available communication times associated with it, and the first and second proposed communication times can therefore be selected from the set of available communication times. When the first proposed communication time overlaps with the second proposed communication time, the platform server can prioritize the first proposed communication time over the second proposed communication time. In some embodiments, the end time occurs after an amount of time has elapsed from the confirmed communication time, and in some embodiments, the end time occurs when a communication between two users concludes.

In another aspect of the inventive subject matter, a method of facilitating online dating connections is contemplated, the method comprising: creating, on a platform server, a first user account comprising a first user profile corresponding to a first user, a second user account comprising a second user profile corresponding to a second user, and a third user account comprising a third user profile corresponding to a third user; sending, from the platform server to the first user, a first list of user profiles comprising the third user profile; sending, from the platform server to the second user, a second list of user profiles comprising the third user profile; receiving, at the platform server from the first user, a first communication request comprising a first selection of the third user profile and a first proposed communication time; sending, from the platform server to the third user, a first communication request notification comprising the first proposed communication time; receiving at a receipt time, at the platform server from the third user, a communication acceptance comprising a confirmed communication time corresponding to the first proposed communication time; connecting the first user and the third user to engage in a communication at the confirmed communication time, where the first user and the third user communicate from the confirmed communication time until an end time; receiving between the receipt time and the end time, at the platform server from the second user, a second communication request comprising a second selection of the third user profile and a second proposed communication time; and sending after the end time, from the platform server to the third user, a first communication request notification comprising the first proposed communication time.

In some embodiments, the first user and the third user are connected via at least one of voice over IP, video chat, and text messaging. The third user profile can have a set of available communication times associated with it, and the first and second proposed communication times can therefore be selected from the set of available communication times. In some embodiments, the method also includes the step of preventing the first user and the third user from receiving any new communication request notifications between the receipt time and the end time. The end time can occur after an amount of time has elapsed from the confirmed communication time, or the end time can occur when a communication between two users concludes.

In some embodiments, this specification describes a computer program, or computer-readable instructions, which, when executed by a computing apparatus, cause the computing apparatus to perform (at least) any method as described herein.

In some embodiments, this specification describes an apparatus comprising: at least one processor; and at least one memory including computer program code which, when executed by the at least one processor, causes the apparatus to perform (at least) any method as described herein.

In some embodiments, this specification describes an apparatus comprising: means for creating, on a platform server, a first user account comprising a first user profile corresponding to a first user and a second user account comprising a second user profile corresponding to a second user; means for sending, from the platform server to the first user, a list of user profiles comprising the second user profile; means for receiving, at the platform server from the first user, a communication request comprising a selection of the second user profile and a proposed communication time; means for sending, from the platform server to the second user, a communication request notification comprising the proposed communication time; means for receiving at a receipt time, at the platform server from the second user, a communication acceptance comprising a confirmed communication time; means for connecting the first user and the second user to engage in a communication at the confirmed communication time, wherein the first user and the second user communicate from the confirmed communication time until an end time; an means for preventing the first user and the second user from receiving new communication request notifications between the receipt time and the end time.

In some embodiments, this specification describes an apparatus comprising: means for creating, on a platform server, a first user account comprising a first user profile corresponding to a first user, a second user account comprising a second user profile corresponding to a second user, and a third user account comprising a third user profile corresponding to a third user; means for sending, from the platform server to the first user, a first list of user profiles comprising the third user profile; means for sending, from the platform server to the second user, a second list of user profiles comprising the third user profile; means for receiving, at the platform server from the first user, a first communication request comprising a first selection of the third user profile and a first proposed communication time; means for receiving, at the platform server from the second user, a second communication request comprising a second selection of the third user profile and a second proposed communication time; means for sending, from the platform server to the third user, a first communication request notification comprising the first proposed communication time and a second communication request notification comprising the second proposed communication time means for receiving at a receipt time, at the platform server from the third user, a communication acceptance comprising a confirmed communication time corresponding to the first proposed communication time; means for connecting the first user and the third user to engaged in a communication at the confirmed communication time, wherein the first user and the third user communicate from the confirmed communication time until an end time; means for preventing the first user and the third user from receiving new communication request notifications from the receipt time until the end time; and means for hiding, from the third user, the second communication request notification from the receipt time until the end time.

In some embodiments, this specification describes an apparatus comprising: means for creating, on a platform server, a first user account comprising a first user profile corresponding to a first user, a second user account comprising a second user profile corresponding to a second user, and a third user account comprising a third user profile corresponding to a third user; means for sending, from the platform server to the first user, a first list of user profiles comprising the third user profile; means for sending, from the platform server to the second user, a second list of user profiles comprising the third user profile; means for receiving, at the platform server from the first user, a first communication request comprising a first selection of the third user profile and a first proposed communication time; means for sending, from the platform server to the third user, a first communication request notification comprising the first proposed communication time; means for receiving at a receipt time, at the platform server from the third user, a communication acceptance comprising a confirmed communication time corresponding to the first proposed communication time; means for connecting the first user and the third user to engage in a communication at the confirmed communication time, wherein the first user and the third user communicate from the confirmed communication time until an end time; means for receiving between the receipt time and the end time, at the platform server from the second user, a second communication request comprising a second selection of the third user profile and a second proposed communication time; and means for sending after the end time, from the platform server to the third user, a first communication request notification comprising the first proposed communication time.

In some embodiments, this specification describes a computer program comprising instructions which, when executed by an apparatus, cause the apparatus to: create, on a platform server, a first user account comprising a first user profile corresponding to a first user and a second user account comprising a second user profile corresponding to a second user; send, from the platform server to the first user, a list of user profiles comprising the second user profile; receive, at the platform server from the first user, a communication request comprising a selection of the second user profile and a proposed communication time; send, from the platform server to the second user, a communication request notification comprising the proposed communication time; receive at a receipt time, at the platform server from the second user, a communication acceptance comprising a confirmed communication time; connecting the first user and the second user to engage in a communication at the confirmed communication time, where the first user and the second user communicate from the confirmed communication time until an end time; and prevent the first user and the second user from receiving new communication request notifications between the receipt time and the end time.

In some embodiments, this specification describes a computer program comprising instructions which, when executed by an apparatus, cause the apparatus to: create, on a platform server, a first user account comprising a first user profile corresponding to a first user, a second user account comprising a second user profile corresponding to a second user, and a third user account comprising a third user profile corresponding to a third user; send, from the platform server to the first user, a first list of user profiles comprising the third user profile; send, from the platform server to the second user, a second list of user profiles comprising the third user profile; receive, at the platform server from the first user, a first communication request comprising a first selection of the third user profile and a first proposed communication time; receive, at the platform server from the second user, a second communication request comprising a second selection of the third user profile and a second proposed communication time; send, from the platform server to the third user, a first communication request notification comprising the first proposed communication time and a second communication request notification comprising the second proposed communication time; receive at a receipt time, at the platform server from the third user, a communication acceptance comprising a confirmed communication time corresponding to the first proposed communication time; connect the first user and the third user to engage in a communication at the confirmed communication time, where the first user and the third user communicate from the confirmed communication time until an end time; prevent the first user and the third user from receiving new communication request notifications from the receipt time until the end time; and hide, from the third user, the second communication request notification from the receipt time until the end time.

In some embodiments, this specification describes a computer program comprising instructions which, when executed by an apparatus, cause the apparatus to: create, on a platform server, a first user account comprising a first user profile corresponding to a first user, a second user account comprising a second user profile corresponding to a second user, and a third user account comprising a third user profile corresponding to a third user; send, from the platform server to the first user, a first list of user profiles comprising the third user profile; send, from the platform server to the second user, a second list of user profiles comprising the third user profile; receive, at the platform server from the first user, a first communication request comprising a first selection of the third user profile and a first proposed communication time; send, from the platform server to the third user, a first communication request notification comprising the first proposed communication time; receive at a receipt time, at the platform server from the third user, a communication acceptance comprising a confirmed communication time corresponding to the first proposed communication time; connect the first user and the third user to engage in a communication at the confirmed communication time, where the first user and the third user communicate from the confirmed communication time until an end time; receive between the receipt time and the end time, at the platform server from the second user, a second communication request comprising a second selection of the third user profile and a second proposed communication time; and send after the end time, from the platform server to the third user, a first communication request notification comprising the first proposed communication time.

One should appreciate that the disclosed subject matter provides many advantageous technical effects including creating an environment whereby communications between users can take place with fewer interruptions or distractions.

Various objects, features, aspects and advantages of the inventive subject matter will become more apparent from the following detailed description of preferred embodiments, along with the accompanying drawing figures in which like numerals represent like components.

### Detailed Description

The following discussion provides example embodiments of the inventive subject matter. Although each embodiment represents a single combination of inventive elements, the inventive subject matter is considered to include all possible combinations of the disclosed elements. Thus if one embodiment comprises elements A, B, and C, and a second embodiment comprises elements B and D, then the inventive subject matter is also considered to include other remaining combinations of A, B, C, or D, even if not explicitly disclosed.

As used in the description in this application and throughout the claims that follow, the meaning of "a," "an," and "the" includes plural reference unless the context clearly dictates otherwise. Also, as used in the description in this application, the meaning of "in" includes "in" and "on" unless the context clearly dictates otherwise.

Also, as used in this application, and unless the context dictates otherwise, the term "coupled to" is intended to include both direct coupling (in which two elements that are coupled to each other contact each other) and indirect coupling (in which at least one additional element is located between the two elements). Therefore, the terms "coupled to" and "coupled with" are used synonymously.

It should be noted that any language directed to a computer should be read to include any suitable combination of computing devices, including servers, interfaces, systems, databases, agents, peers, Engines, controllers, or other types of computing devices operating individually or collectively. One should appreciate the computing devices comprise a processor configured to execute software instructions stored on a tangible, non-transitory computer readable storage medium (e.g., hard drive, solid state drive, RAM, flash, ROM, etc.). The software instructions preferably configure the computing device to provide the roles, responsibilities, or other functionality as discussed below with respect to the disclosed apparatus. In especially preferred embodiments, the various servers, systems, databases, or interfaces exchange data using standardized protocols or algorithms, possibly based on HTTP, HTTPS, AES, public-private key exchanges, web service APIs, known financial transaction protocols, or other electronic information exchanging methods. Data exchanges preferably are conducted over a packet-switched network, the Internet, LAN, WAN, VPN, or other type of packet switched network. The following description includes information that may be useful in understanding the present invention. It is not an admission that any of the information provided in this application is prior art or relevant to the presently claimed invention, or that any publication specifically or implicitly referenced is prior art.

Embodiments of the inventive subject matter are directed to systems and methods of improving online dating interactions. Users are able to select other users they would like to converse with based on mutual selections. For example, if a first user and second user both indicate a desire to communicate with one another, then the first user and the second user are then connected to each other to talk, text, video chat, etc. Embodiments of the inventive subject matter emphasize undistracted communication, and instead of creating matches that can then optionally mature into communications later, a first user can indicate a desire to communicate with a second user by proposing times to communicate, and when the second user indicates the same desire and chooses a time, those users will have created a scheduled time to talk to each other. This prevents situations where matches sit stagnant and creates an environment for more deliberate match selection.

Interactions that take place according to embodiments of the inventive subject matter are facilitated by a platform server that is configured to communicate via network connection to a plurality of user devices. A platform server can be one or more servers (e.g., a cloud server) having executable software code that brings about the actions and effects discussed below. User devices can be any kind of computing device that is network connected and configured to communicate with the platform server (e.g., a mobile phone, a tablet, a computer, etc.). Additional detail about device and platform server interaction is discussed below regarding **Figure 7.**

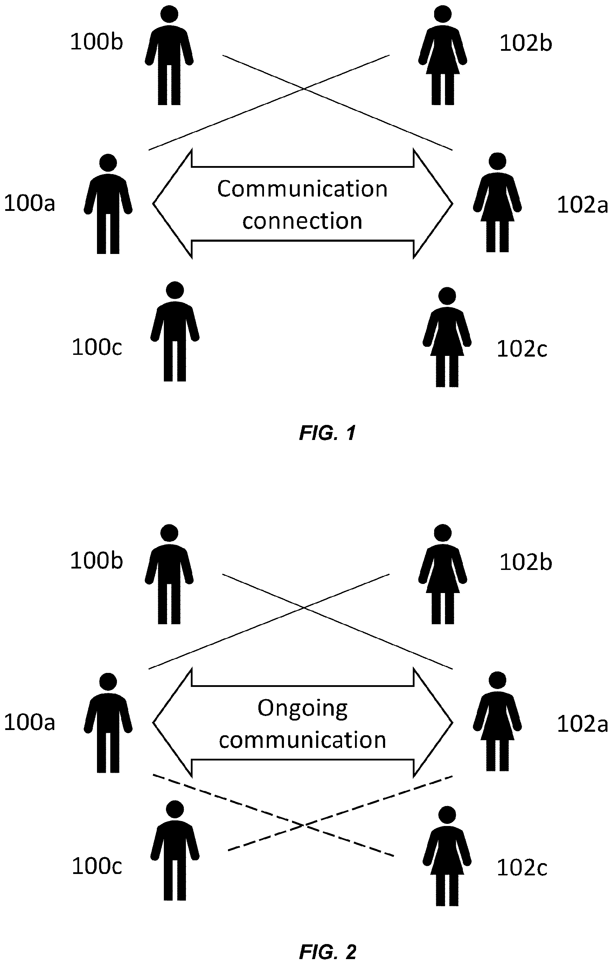

For example, **Figure** 1 shows how a group of men and women (gender specified only for convenience of explanation) can match with one another. Man 100a has indicated to women 102a, 102b, and 102c that he wishes to initiate some communication, while woman 102a has indicated to men 100a, 100b, and 100c that she wishes to initiate some communication. In this scenario, man 100a and woman 102a have mutually connected., as indicated by the double-sided communication connection line. In instances where man 100a is first to indicate a desire to communicate with woman 102a, man 100a is responsible for proposing times to communicate, and, upon woman 102a indicating a desire to communicate with man 100a, she is presented with the times he proposed. The opposite can also occur. In some embodiments, a first user can indicate times when they are generally available for communications and, when a second user indicates a desire to communicate with the first user, the second user can select from the communication times the first user has indicated they are generally available.

According to embodiments of the inventive subject matter, users can search for other users based on, e.g., interests, location, and so on. User interests can be represented, e.g., by profile questions that highlight a user's response. Responses can be free-form text, or, in some embodiments, responses to pre-set questions can be selected from a list. User responses can be used to improve matchmaking by, e.g., allowing for users to search for other users that have answered the same or similar responses to certain questions. For example, if a first user would like to meet a second user that is into both skiing and art films, the first user could select those two interests to act as a search filter. The first user would then be presented with a list of other users that have selected those two interests as well. Search results can additionally be geographically limited (e.g., 5 miles, 10 miles, 15 miles, 25 miles, 50 miles away, etc.). Users can further refine a search by, e.g., adding more filters. Other filters can include, e.g., history books, different genres of music, trying new restaurants/foods, and so on.

The first user thus is given an option to view different profiles returned after conducting a search. If the first user wants to communicate with a second user, the first user can indicate a desire to schedule a communication (e.g., a phone call). If the second user similarly indicates a desire to schedule a communication, the first user and the second user are considered matched.

Thus, once man 100a and woman 102a choose to communicate at a selected time, they can begin messaging with one another at that time. By choosing to communicate, other matches or attempts to communicate can be temporarily suppressed or hidden from both participants. For example, **Figure 2** shows that while a communication between man 100a and woman 102a is either pending or ongoing, new notifications for man 100a and woman 102a are suppressed. Thus, man 100a is not alerted to a new communication request from woman 102c while he is still communicating with woman 102a. Similarly, woman 102a is not alerted to a new communication request from man 100c while she is still communicating with man 100a.

Notification suppression of the inventive subject matter can function in several ways. In some embodiments, when a user has several communication requests to choose from and they respond to one of the communication requests, the system automatically hides all other communication requests and suppresses notifications of new communication requests until after the communication has ended. Both users can see all accrued notifications once they are no longer communicating with one another. A communication can end by, e.g., one or both users providing an input indicating they would like to keep searching for new users. Thus, in some embodiments, a platform server still receives new communication requests from various users asking to communicate with a first user, but those communication requests are suppressed by preventing the first user from receiving any communication request notifications during some period (e.g., from a time the first user accepts a different communication request until conclusion of that communication or as otherwise described in this application).

If, after a communication ends, a user wants to continue (e.g., re-open) a communication with a user they were just communicating with, then when they are reviewing all suppressed notifications, they can also select an option to schedule a new call with the user they were just speaking with. When two users have both indicated they want to initiate a communication together (e.g., when one user sends a request with a list of times, and the second user chooses a time from the list), then notifications for both users can be suppressed until, e.g., after the communication has ended and one of the users chooses to continue to search for other users to communicate with. If a user indicates a desire to continue searching, the user can then be shown all suppressed notifications.

In some embodiments, after a communication has ended, new communication request notifications can continue to be suppressed for a set amount of time to give a user some time to contemplate whether to schedule a new communication with the same user. Continued communication request notification suppression can last for 0-12 hours. During this time period, the user whose new communication request notifications are suppressed can additionally be made unavailable for new communication requests (e.g., other users are unable to request new communications with them). In such embodiments, the time period after a communication has concluded where new notifications are suppressed, and where, in some embodiments, new requests cannot be made, effectively moves back the communication end time.

In addition to suppressing new communication request notifications, if a user had already sent out communication requests that were pending acceptance when the user accepted a proposed communication, those pending communication requests can be hidden from other users until the user has completed a communication or for some amount of time thereafter as described above. Pending communication requests can be hidden for all or any amount of time beginning at a time a user's communication request is accepted, or a time a user accepts another user's communication request, until the end of a communication or for some amount of time thereafter. A communication can be considered to have ended when a communication concludes (e.g., a phone call ends), when a user chooses to search for a new communication partner, or when some amount of time has passed after a user has concluded a communication but has not chosen whether to schedule another communication or to search for a new communication partner.

In some embodiments, after a communication has ended, users can see suppressed notifications when deciding whether to schedule another communication with existing match or to search for new users to communicate with. In some embodiments, when a first user attempts to schedule a communication with a second user, notifications to the first user can be suppressed leading up to and during the communication. In some embodiments, notifications are only suppressed during the communication. If a first user and a second user do not connect for a scheduled communication (e.g., one person forgets), the scheduled communication becomes a missed communication. When a missed communication occurs, notifications can remain suppressed until the users are able to successfully reschedule or abandon the communication.

Thus, in some embodiments, man 100a and woman 102a are not alerted to any new communication requests while communicating with one another. In some embodiments, alerts indicating new communication requests can be delayed by an amount of time while a user that is in an ongoing communication. For example, alerts can be delayed by minutes, hours, days, or even weeks. A time delay can give two communicating users a chance to talk to one another undistracted without missing out on matches or communication attempts that may no longer be relevant if too much time elapses.

One method of delaying communication notifications involves the platform server checking if a user has an upcoming scheduled communication. If yes, the platform server (or, in some embodiments, the user device) can stop checking for new communication notifications, thereby delaying new notifications until, e.g., after a communication is complete. In some embodiments, delayed notifications can be delivered in an order they were received.

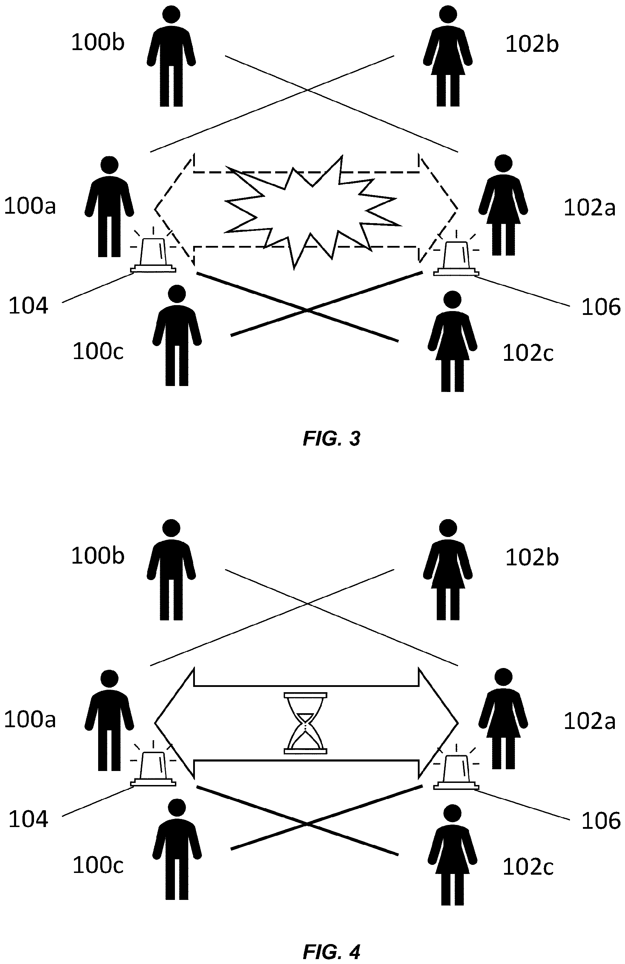

**Figure 3** shows what happens when man 100a and woman 102a end an ongoing communication. For example, take situation where while man 100a and woman 102a were exclusively communicating, man 100a received a communication request from woman 102c and woman 102a received a communication request from man 100c. Once man 100a and woman 102a end their communication, they can both be alerted to their new communication requests. Man 100a is thus delivered alert 104 and woman 102a is given alert 106. These alerts can be pushed via, e.g., a software application man 100a and woman 102a are using (e.g., web browser, mobile app, etc.) to interact with other users. Alert 104 indicates to man 100a that he has a communication request from woman 102c, and alert 106 alerts woman 102a that she has a communication request from man 100c.

After a communication, each user can be presented with the options of scheduling another communication with the same user or searching for other users to communicate with. In some embodiments, even in instances where a user chooses to schedule another communication with the same user, that user can be shown all suppressed notifications before scheduling the communication. Ordinarily, communications end when, e.g., at least one of the two users involved in the communication chooses to search for new users to communicate with. Once a communication has ended, suppressed notifications can then be delivered.

In addition to suppressing notifications that a user has access to once a communication is scheduled or ongoing, any proposed communications that the user has sent to other users can be hidden from those other users, too. For example, if a first user has proposed communications with a second user and a third user, and the second user accepts the proposed communication, the third user will no longer be able to confirm a communication time with the first user while the first user and the second user have a pending or ongoing communication. In some cases, when the first user and the second user confirm a communication time, the third user can still accept the first user's communication, but the first user will not receive notification that the third user has accepted until after the communication between the first user and the second user has ended.

**Figure 4** is similar to **Figure 3** except that it shows the time delay feature mentioned above. Thus, while man 100a and woman 102a are communicating, after some amount of time has elapsed (e.g., on one or a series of phone calls), both man 100a and woman 102a are given alerts that they have new communication requests. **Figure 4** can also be interpreted as indicating that some threshold number of messages or interactions has occurred, and once that threshold has been met, man 100a and woman 102a can be given notifications indicating they have new communication requests. For example, in some embodiments, users are not given new notifications until some number of messages have been sent back and forth, thereby giving those users a chance to form a new connection.

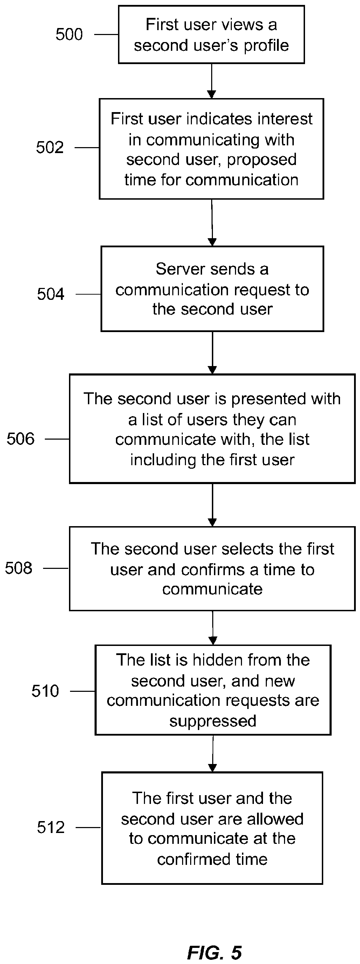

**Figure 5** shows a flowchart describing steps of an embodiment of the inventive subject matter. This embodiment involves at least a first user and a second user, where both users have accounts with a service of the inventive subject matter (e.g., where each account is associated with a dating profile). In step 500, the first user views a second user's profile. The second user's profile can be made available to the first user via, e.g., a filtered search as described above.

Next, in step 502, the first user indicates interest in communicating with the second user. This can be accomplished by, e.g., swiping on a photograph, interacting with the second user's profile, input from the first user, etc. When indicating a desire to communicate with the second user, the first user additionally selects a time for a communication with the second user. In step 504, the platforms server sends a communication request to the second user, where the communication request includes the selected communication time. In some embodiments, the first user selects one or more times from a list of times when second user has indicated availability, and in some embodiments, the first user selects one or more times to propose to the second user.

In addition to a proposed time for a conversation, a communication request can also include a proposed topic for conversation. Available topics can be selected based on overlapping interest between the users (e.g., as defined in each user's profile), from a randomly selected set of interests, from just one of the user's interests, and so on.

In step 506, the second user is presented with a list of users that have requested to communicate with them, including the communication request from the first user. In step 508, the second user selects another user to communicate with and confirms a time to communicate based on a proposed time selected by the first user. For demonstrative purposes, the second user is described as selecting the first user. Next, in step 510, the list presented to the second user is then hidden from the second user. By doing so, the second user in unable to begin or schedule any new communications. Finally, in step 512, the first user and the second user are allowed to communicate with one another at the confirmed time. This can occur by the platform server facilitating a communication between the users via voice over IP (VOIP), audio call, video call, text messaging (e.g., using phone numbers, in-app messaging services, or otherwise), virtual reality, augmented reality, or any other messaging/communication service.

In some cases, it is possible for multiple users to try to schedule communications with the same second user at the same time. In some embodiments, users will be prioritized on a first come, first served basis. In other words, the first user to propose a communication at a certain time will have their communication request presented first over a second communication request for that same time (or for some overlapping time). In some embodiments, the second user can choose which user to communicate with, and the other request can then be placed at the top of the second user's list after concluding the first scheduled communication.

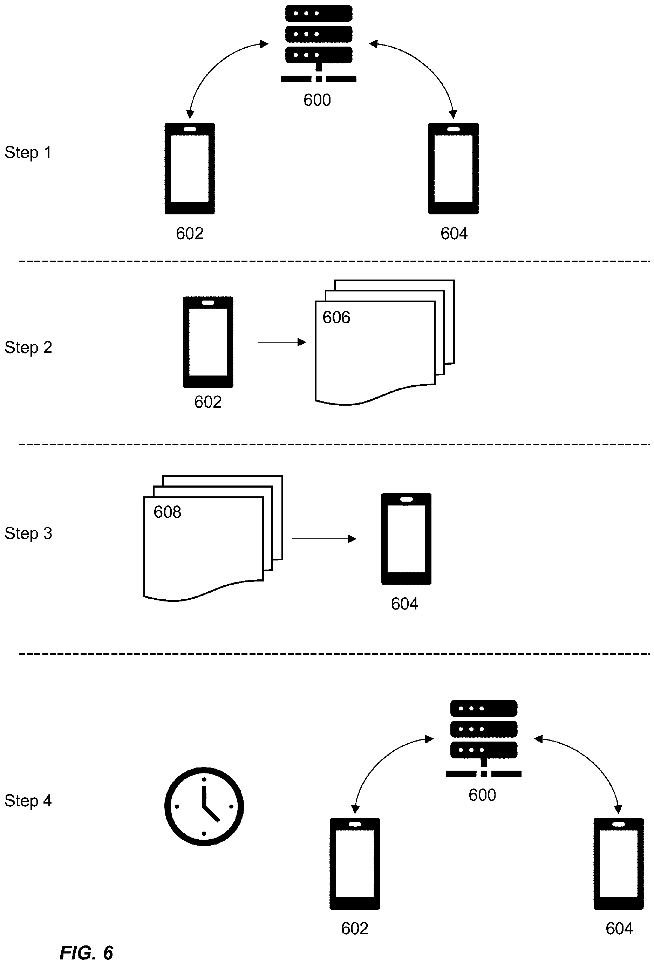

**Figure 6** is a schematic showing how information flows between platform server 600, first user device 602, and second user device 604. Although the following description includes enumerated steps, it should be understood that not all information that passes back and forth in an actual implemented system of the inventive subject matter are discussed. Moreover, many of the steps or aspects in the following example are described above in greater detail, and it should be understood that anything described above can modify or be imported into this example without deviating from the inventive subject matter. Additionally, although the example described in Figure 6 includes details about just two users, systems and methods of the inventive subject matter are intended to function with many users. Second user 604, for example, is therefore one of many possible "second users," each with their own user profiles and each able to engage with the inventive subject matter as described regarding first user 602.

In step 1, both first user device 602 and second user device 604 set up user accounts (e.g., with associated user profiles) with the platform server. Thus, first user device 602 is used by a first user who has a first user profile, and second user device 604 is used by a second user who has a second user profile. In this step, the first user device can retrieve a list of user profiles in searching for a communication partner, where that list of user profiles includes the second user's profile. Searching for user profiles can be carried out according to searching and filtering described above.

In step 2, first user device 602 presents a list of user profiles 606. The first user can then select one or more users they would like to communicate with by, e.g., proposing different times to communicate. Sending communication requests is described above in more detail, but, for example, first user could send communication requests to four other users including the second user, where each communication requests includes one or more proposed times to communicate.

In step 3, second user device 604 receives one or more communication requests 608 (via platform server 600). The second user can then select who they would like to communicate with based on those requests. While the second user could choose not to accept any of the requests, for purposes of explanation, this example assume the second user will accept at least one of the requests. In instances where the second user accepts just one communication request, the second user and the first user are then scheduled to communicate with one another. In instances where the second user accepts multiple communication requests, each of the accepted requests must occur at different times. In some embodiments, the second user can only accept one communication request at a time, and in some embodiments, the second user can only look at one communication request at a time. In this example, the second user has accepted the first user's communication request.

Once the second user has accepted the first user's communication request, the platform server can facilitate communication between the two users. Step 4 shows that, at the time proposed by the first user and accepted by the second user, the first and second user can communicate. The first user using the first user device 602 and the second user using the second user device 604, where the first user device 602 and the second user device 604 are able to communicate via the platform server 600. By routing communication via platform server 600, the first user and the second user can maintain privacy by, e.g., not sharing actual phone numbers or other personally identifying information. Communication via platform server 600 can occur, e.g., over VOIP, text message exchange, video chat, and so on.

Thus, specific systems and methods directed to facilitating more meaningful communication in online dating have been disclosed. It should be apparent, however, to those skilled in the art that many more modifications besides those already described are possible without departing from the inventive concepts in this application. The inventive subject matter, therefore, is not to be restricted except in the spirit of the disclosure. Moreover, in interpreting the disclosure all terms should be interpreted in the broadest possible manner consistent with the context. In particular the terms "comprises" and "comprising" should be interpreted as referring to the elements, components, or steps in a non-exclusive manner, indicating that the referenced elements, components, or steps can be present, or utilized, or combined with other elements, components, or steps that are not expressly referenced.

## Claims

1. A method of facilitating online dating connections, the method comprising:
creating, on a platform server, a first user account comprising a first user profile corresponding to a first user and a second user account comprising a second user profile corresponding to a second user;
sending, from the platform server to the first user, a list of user profiles comprising the second user profile;
receiving, at the platform server from the first user, a communication request comprising a selection of the second user profile and a proposed communication time;
sending, from the platform server to the second user, a communication request notification comprising the proposed communication time;
receiving at a receipt time, at the platform server from the second user, a communication acceptance comprising a confirmed communication time;
connecting the first user and the second user to engage in a communication at the confirmed communication time, wherein the first user and the second user communicate from the confirmed communication time until an end time; and
preventing the first user and the second user from receiving new communication request notifications between the receipt time and the end time.

2. The method of claim 1, wherein the first user and the second user are connected via at least one of voice over IP, video chat, and text messaging.

3. The method of claim 1 or claim 2, wherein the second user profile has a set of available communication times associated with it, and wherein the proposed communication time is selected from the set of available communication times.

4. The method of any one of claims 1 to 3, wherein the end time occurs after an amount of time has elapsed from the confirmed communication time.

5. A method of facilitating online dating connections, the method comprising:
creating, on a platform server, a first user account comprising a first user profile corresponding to a first user, a second user account comprising a second user profile corresponding to a second user, and a third user account comprising a third user profile corresponding to a third user;
sending, from the platform server to the first user, a first list of user profiles comprising the third user profile;
sending, from the platform server to the second user, a second list of user profiles comprising the third user profile;
receiving, at the platform server from the first user, a first communication request comprising a first selection of the third user profile and a first proposed communication time;
receiving, at the platform server from the second user, a second communication request comprising a second selection of the third user profile and a second proposed communication time;
sending, from the platform server to the third user, a first communication request notification comprising the first proposed communication time and a second communication request notification comprising the second proposed communication time;
receiving at a receipt time, at the platform server from the third user, a communication acceptance comprising a confirmed communication time corresponding to the first proposed communication time;
connecting the first user and the third user to engaged in a communication at the confirmed communication time, wherein the first user and the third user communicate from the confirmed communication time until an end time;
preventing the first user and the third user from receiving new communication request notifications from the receipt time until the end time; and
hiding, from the third user, the second communication request notification from the receipt time until the end time.

6. The method of claim 5, wherein the first proposed communication time overlaps with the second proposed communication time and the platform server therefore prioritizes the first proposed communication time over the second proposed communication time.

7. The method of claim 5 or claim 6, wherein the end time occurs after an amount of time has elapsed from the confirmed communication time.

8. A method of facilitating online dating connections, the method comprising:
creating, on a platform server, a first user account comprising a first user profile corresponding to a first user, a second user account comprising a second user profile corresponding to a second user, and a third user account comprising a third user profile corresponding to a third user;
sending, from the platform server to the first user, a first list of user profiles comprising the third user profile;
sending, from the platform server to the second user, a second list of user profiles comprising the third user profile;
receiving, at the platform server from the first user, a first communication request comprising a first selection of the third user profile and a first proposed communication time;
sending, from the platform server to the third user, a first communication request notification comprising the first proposed communication time;
receiving at a receipt time, at the platform server from the third user, a communication acceptance comprising a confirmed communication time corresponding to the first proposed communication time;
connecting the first user and the third user to engage in a communication at the confirmed communication time, wherein the first user and the third user communicate from the confirmed communication time until an end time;
receiving between the receipt time and the end time, at the platform server from the second user, a second communication request comprising a second selection of the third user profile and a second proposed communication time; and
sending after the end time, from the platform server to the third user, a first communication request notification comprising the first proposed communication time.

9. The method of claim 8, further comprising preventing the first user and the third user from receiving any new communication request notifications between the receipt time and the end time.

10. The method of claim 8 or claim 9, wherein the end time occurs after an amount of time has elapsed from the confirmed communication time.

11. The method of any one of claims 5 to 10, wherein the first user and the third user are connected via at least one of voice over IP, video chat, and text messaging.

12. The method of any one of claims 5 to 11, wherein the third user profile has a set of available communication times associated with it, and wherein the first and second proposed communication times are selected from the set of available communication times.

13. The method of any one of the preceding claims, wherein the end time occurs when the communication is concluded.

14. An apparatus comprising: at least one processor; and at least one processor; and at least one memory including computer program code which, when executed by the at least one processor, causes the apparatus to perform a method as claimed in any one of claims 1 to 13.

15. A computer program comprising instructions which, when executed by a computer, cause the apparatus to perform a method as claimed in any one of claims 1 to 13.
